# EUROPÄISCHE PATENTSCHRIFT

(11) **EP 1 276 586 B1**
(45) Veröffentlichungstag und Bekanntmachung des Hinweises auf die Patenterteilung: **10.08.2005**
(21) Anmeldenummer: 01929282.0
(22) Anmeldetag: 29.03.2001
(51) Int. Cl.: B23K 26/02, G02B 21/32

(54) **LASER-MIKRO-DISSEKTIONSGERÄT**
LASER MICRODISSECTION DEVICE
DISPOSITIF DE MICRODISSECTION LASER

(30) Priorität: 13.04.2000 DE 10018253
(43) Veröffentlichungstag der Anmeldung: 22.01.2003
(73) Patentinhaber: Leica Microsystems Wetzlar GmbH, 35578 Wetzlar (DE)
(72) Erfinder: WEISS, Albrecht, 35440 Linden (DE)
(74) Vertreter: Reichert, Werner F., Dr.
(86) Internationale Anmeldenummer: PCT/DE2001/001227
(87) Internationale Veröffentlichungsnummer: WO 2001/078937

(56) Entgegenhaltungen:
- WO-A-98/14816

## Beschreibung

Die Erfindung betrifft ein Laser-Mikro-Dissektionsgerät mit den Merkmalen des Oberbegriffs des unabhängigen Anspruchs 1.

Bekannte Geräte zur Laser-Mikrodissektion (Siehe WO-A-98-148 16) umfassen eine Auflicht-Einrichtung, in deren Strahlengang ein UV-Laserstrahl eingekoppelt wird. Das UV-Laserlicht wird durch den Auflichtstrahlengang geführt und durch ein Mikroskop-Objektiv auf ein Präparat fokussiert, das auf einem motorisch verfahrbaren Mikroskoptisch (Scanningtisch) aufliegt. Die mit dem UV-Laserlicht erzeugte hohe Energiedichte in dem Fokus wird dazu benutzt, im Präparat zu schneiden (= zu dissektionieren). Eine Schnittlinie wird dadurch erzielt, dass beim Schneiden der Mikroskoptisch verfahren wird, um das Präparat relativ zu dem feststehenden Laserstrahl zu bewegen. In der Regel arbeitet man mit gepulsten Lasern. Dabei entsteht durch einen Laserpuls ein kleines Loch in dem Präparat. Eine Schnittlinie entsteht durch passendes Aneinanderreihen solcher Löcher. Dazu muss der Mikroskoptisch insbesondere bei stark vergrößernden Objektiven eine hohe Positioniergenauigkeit besitzen, um präzise Schnitte zu ermöglichen. Solche Mikroskoptische sind teuer.

Beim Bewegen des Präparats um den Schneidpunkt des Laserstrahls erscheint dem Beobachter auch das Bild bewegt. Insbesondere störend ist dies, wenn die Beobachtung mit einer langsamen Kamera und einem Monitor erfolgt. Das Monitorbild verschwimmt dann und zeigt ruckartige Veränderungen. Es wäre daher aus Anwendersicht günstiger, beim Schneiden den Mikroskoptisch und damit das Präparat feststehen zu lassen.

Wenn jedoch der Mikroskoptisch feststeht, muss der Laserstrahl über das feststehende Präparat bewegt werden. Um den Laserstrahl über ein bestimmtes Feld auf dem Präparat führen zu können, muss der in das Objektiv einfallende Laserstrahl unter sich ändernden Winkeln in die Objektivpupille eintreten. Diese Winkeländerung muss mittels einer Scan-Einrichtung in x- und y-Richtung realisiert werden.

Solche Scan-Einrichtungen sind beispielsweise Spiegelscanner, Galvanometerscanner oder Schrittmotorscanner, wie sie in Scanning Optical Mikroskopen verwendet werden. Die Scan-Einrichtung muss jeweils in einer zu der Objektivpupille konjugierten Ebene angeordnet werden. Dazu ist ein sogenannte Pupillenabbildung erforderlich, da sonst der abgelenkte Strahl die Objektivpupille nicht trifft.

Der Nachteil dieser bekannten Scan-Einrichtungen besteht genau darin, dass sie diese Pupillenabbildung benötigen. Bei der Mikro-Dissektion mit UV-Laserlicht wäre eine UV-taugliche Pupillenabbildung erforderlich. Bei einer Anordnung mit einer Pupillenabbildung muss eine Reihe von Funktionseinheiten, wie z.B. die Apertur-Begrenzungs-Einrichtung, die Offset-Optik aus zwei verschiebbaren Linsen, spezielle Graufilter etc., zwischen der Scan-Einrichtung und dem Laser angeordnet werden. Dadurch erreichen solche Systeme eine große Baulänge und benötigen viel Platz. Außerdem sind bekannte Scan-Einrichtungen einschließlich der Ansteuerelektronik sehr teuer.

Es ist daher Aufgabe der vorliegenden Erfindung, ein kompaktes, einfach aufgebautes und preiswertes Laser-Mikro-Dissektionsgerät anzugeben, das keine Pupillenabbildung benötigt und die Nachteile des Standes der Technik vermeidet.

Diese Aufgabe wird gelöst durch ein Laser-Mikro-Dissektionsgerät mit
- einem Mikroskoptisch, der ein zu schneidendes Präparat trägt,
- und einer Auflicht-Einrichtung, einer Laserlichtquelle und einem Mikroskop-Objektiv zum Fokussieren des Laserlichts der Laserlichtquelle auf das Präparat,
welches folgende neue Merkmale aufweist:
a) dass der Mikroskoptisch bezüglich der x-y-Richtung beim Schneiden feststehend angeordnet ist,
b) und dass in der Auflicht-Einrichtung eine Laser-Scan-Einrichtung angeordnet ist, die aus zwei dicken, gegen die optische Achse geneigten und unabhängig von einander um die optische Achse drehbaren Glas-Keilplatten besteht, welche durch ihre Keilwinkel eine Strahlablenkung erzeugen, wobei durch die Drehung der Glas-Keilplatten der resultierende Ablenkwinkel α des Laserstrahls gegenüber der optischen Achse variabel ist,
c) und dass der Laserstrahl am Ausgang der Scan-Einrichtung durch die Dicke und die Schrägstellung der Glas-Keilplatten einen seitlichen Strahlversatz gegenüber der optischen Achse aufweist und für alle Ablenkwinkel α die Mitte der Objektiv-Pupille des Objektivs trifft.

Die technische Besonderheit besteht in der Ausgestaltung und räumlichen Anordnung der beiden Keilplatten.

Es sind zwar bereits optische Einheiten bekannt, mit denen man eine Strahlablenkung erzeugen kann. So wäre es denkbar, eine Strahlablenkung des Laserstrahls im Bereich der Auflicht-Einrichtung zu realisieren, indem der Laserstrahl entweder eine optische Einheit aus zwei gegeneinander verschiebbaren Linsen (sogenannter Abat'scher Keil) oder eine optische Einheit aus zwei gegeneinander verdrehbaren, dünnen Glas-Keilen durchtritt. Diese optischen Einheiten haben jedoch den Nachteil, dass der Laserstrahl ausschließlich eine Strahlablenkung erfährt und dann außerhalb der Pupille des Objektivs auftrifft. Damit erreicht er nicht mehr das zu schneidende Präparat. Anordnungen mit den genannten optischen Einheiten eignen sich daher nicht zum Einsatz als Laser-Scan-Einrichtung.

Ein erfindungsgemäßes Laser-Mikro-Dissektionsgerät weist daher im Laserstrahlengang eine Laser-Scan-Einrichtung auf, die aus zwei dicken Glas-Keilplatten besteht. Die beiden Glas-Keilplatten können beispielsweise den gleichen Keilwinkel und unterschiedliche Dicken sowie unterschiedliche Neigungen gegenüber der optischen Achse aufweisen. Andere Ausführungsformen der beiden Keilplatten sind denkbar.

Jede Keilplatte erzeugt durch ihren Keilwinkel, wie bekannt, einen Anteil zur gesamten Strahlablenkung des Laserstrahls. (Als Keilwinkel bezeichnet man die Winkeldifferenz zwischen der vorderen Begrenzungsfläche und der hinteren Begrenzungsfläche einer Glas-Keilplatte.) Die beiden Anteile zur gesamten Strahlablenkung addieren sich vektoriell. Durch von einander unabhängige Drehung der beiden Keilplatten um die optische Achse ändern sich die Richtungen der beiden Anteile an der Strahlablenkung. Die beiden Anteile an der Strahlablenkung addieren sich vektoriell zu einer gesamten Strahlablenkung mit einem Ablenkwinkel α des Laserstrahl gegenüber der optischen Achse. Dadurch wird die insgesamt erzeugte Strahlablenkung des Laserstrahls so variiert, dass der Laserstrahl über das zu schneidende Präparat geführt wird.

Die Drehung der Glas-Keilplatten verursacht zugleich eine Änderung des Strahlversatzes am Ausgang der Scan-Einrichtung. Durch diese Änderung des Strahlversatzes wird die seitliche Ablage des Laserstrahls kompensiert, die in der Ebene der Objektiv-Pupille durch die Strahlablenkung erzeugt wird. Dadurch durchtritt der Laserstrahl die Pupille des Objektivs stets unverändert in der Mitte - unabhängig vom erzeugten Ablenkwinkel α.

Durch geeignete Ansteuerung der Drehbewegung der Keilplatten können beliebige Ablenkwinkel α und damit beliebig geformte Schnittlinien erzeugt werden. Bei Parallel-Stellung der beiden Keilplatten entsteht ein maximaler Ablenkwinkel α, bei einer antiparallelen Anordnung ein Ablenkwinkel α = 0 (d.h. der Laserstrahl trifft das Präparat auf der optischen Achse). Mit Vorteil werden die Keilwinkel der beiden Keilplatten so groß gewählt, dass bei einem maximalen Ablenkwinkel α der Laserstrahl bis zum Sehfeldrand ausgelenkt wird.

Mit dem erfindungsgemäßen Laser-Mikro-Dissektionsgerät ist es möglich, das zu schneidende Präparat ortsfest zu lassen und den Laser-Schneidpunkt mit geringem technischem Aufwand über das Präparat zu bewegen. Zugleich ist der erfindungsgemäße Aufbau der Laser-Scan-Einrichtung aus zwei dicken, geneigten, drehbaren Keilplatten wesentlich einfacher und preiswerter als bekannte Strahlscanner. In dem erfindungsgemäßen Laser-Mikro-Dissektionsgerät kann auf einen teuren motorischen xy-Tisch (Scanningtisch) verzichtet werden, denn die Schnittqualität ist unabhängig von der Positioniergenauigkeit des Mikroskoptisches. Als Laserlichtquelle kann ein Laser im ultravioletten (UV) oder infraroten (IR) oder im sichtbaren (VIS) Spektralbereich verwendet werden.

Trifft der von der Laser-Scan-Einrichtung abgelenkte Laserstrahl ein Objektiv, so ist bekanntlich für alle Objektiwergrößerungen die Auslenkung im Objekt proportional zur Objektivvergrößerung. Ist der maximale Ablenkwinkel α gerade so groß, dass der Laserstrahl bis zum Sehfeldrand abgelenkt wird, so gilt dies für alle Objektive unabhängig von deren Vergrößerung. Das bedeutet, dass die Ortsauflösung der Laser-Scan-Einrichtung im Sehfeld für alle Objektive gleich ist. Zum Durchfahren einer Schnittlinie über das gesamte Sehfeld werden für alle Objektive die gleichen Winkeleinstellungen der beiden Keile nacheinander angefahren.

Hier liegt der große Vorteil des erfindungsgemäßen Laser-Mikro-Dissektionsgerätes mit der beschriebenen Laser-Scan-Einrichtung gegenüber einem vorbekannten Laser-Mikro-Dissektionsgerät, das mit einem feststehenden Laserstrahl und einem bewegten xy-Tisch arbeitet. Bei einem bewegten xy-Tisch muss dessen Positionierung mit zunehmender Objektivvergrößerung und damit kleinere Schnittbreite im Objekt immer genauer erfolgen.

Im Gegensatz dazu führt bei der erfindungsgemäßen Laser-Scan-Einrichtung eine gegebene Winkelauflösung für die Keildrehung bei schwachen Objektiven mit größerer Schnittbreite automatisch zu einer größeren Schrittweite im Objekt als bei starken Objektiven mit kleiner Schnittbreite.

Die Tatsache, dass der Mikroskoptisch während des Schneidvorgangs feststeht, hat zusätzlich den Vorteil, dass der Benutzer während des Schneidvorgangs das Präparat beobachten und kontrollieren kann. So kann er auch während eines laufenden Schneidvorgangs bereits gleichzeitig die nächste gewünschte Schnittlinie auswählen.

Ein weiterer Vorteil der Erfindung besteht darin, dass keine Pupillenabbildung erforderlich ist und sämtliche Funktionseinheiten, wie z.B. die Apertur-Begrenzungs-Einrichtung, die Offset-Optik aus zwei verschiebbaren Linsen, spezielle Graufilter etc., in einen kompakten Mikroskop-Strahlengang integriert werden können. Dadurch besitzt das erfindungsgemäße Gerät einen sehr kompakten Aufbau.

In einer vorteilhaften Ausführungsform des erfindungsgemäßen Laser-Mikro-Dissektionsgeräts wird die Drehung der Glas-Keilplatten motorisch durchgeführt. Dazu ist jeder Glas-Keilplatte ein Motor, beispielsweise ein Schrittmotor, zur Drehung der Glas-Keilplatte um die optische Achse zugeordnet. Die Motoren erhalten ihre Steuersignale von einer Motorsteuerung. Die Positioniergenauigkeit der Schrittmotoren, die am günstigsten im Mikro-Schritt-Betrieb angesteuert werden, bestimmt dann auch die Positioniergenauigkeit des Laserstrahls auf dem Präparat.

In einer anderen vorteilhaften Ausführungsform des erfindungsgemäßen Laser-Mikro-Dissektionsgeräts wird die Drehung der Glas-Keilplatten ebenfalls motorisch durchgeführt. Zusätzlich ist ein Rechner mit einer Maus und einem Monitor vorgesehen. Der Rechner ist mit der Motorsteuerung und der Laserlichtquelle verbunden. Weiterhin ist eine Kamera vorgesehen, die ein Bild des Präparats aufnimmt, welches auf dem Monitor dargestellt wird. Bei Verwendung dieser Ausführungsform ist es möglich einen Laserschnitt im Präparat zu erzeugen, indem folgende Verfahrensschritte vorgenommen werden:
a) Definieren einer Schnittlinie mittels der Maus auf dem Monitor,
b) rechnerische Zerlegung der Schnittlinie in eine Reihe von aneinandergrenzenden Schnittlöchern, deren Mittelpunkte den während des Schneidvorgangs auf dem Präparat einzunehmenden Soll-Positionen des Laserstrahls entsprechen,
c) Berechnung des Ablenkwinkels α des Laserstrahls zu jeder einzelnen einzunehmenden Position und Berechnung der zugeordneten Drehstellungen der Glas-Keilplatten,
d) Erzeugen der Steuersignale für die motorische Drehung der Glas-Keilplatten,
e) und Erzeugen der definierten Schnittlinie durch Ablenken des Laserstrahls in die berechneten Soll-Positionen durch Drehen der Glas-Keilplatten.
   Da die angegebene Laser-Scan-Einrichtung eine sehr exakte Führung des abgelenkten Laserstrahls erlaubt, sind auch andere Verwendungen des erfindungsgemäßen Laser-Mikro-Dissektionsgerätes möglich. So kann beispielsweise der von der Laser-Scan-Einrichtung abgelenkte Laserstrahl zur Materialbearbeitung angewendet werden.

In einer anderen Verwendungsform wird der abgelenkte Laserstrahl computergesteuert geführt und es werden mit ihm Oberflächen beschriftet.

In einer dritten Verwendungsform des erfindungsgemäßen Laser-Mikro-Dissektionsgerätes wird der abgelenkte Laserstrahl als optische Pinzette benutzt, indem mit ihm einzelne Partikel erfasst und transportiert werden.

Die Erfindung wird anhand eines Ausführungsbeispiels mit Hilfe der schematischen Zeichnung näher erläutert. Es zeigen:
- ***Fig. 1*** :: ein erfindungsgemäßes Laser-Mikro-Dissektionsgerät;
- ***Fig. 2a***:: Strahlenverlauf des Laserstrahls bei Parallelstellung der Glas-Keilplatten;
- ***Fig. 2b:***: Strahlenverlauf des Laserstrahls bei Anti-Parallelstellung der Glas-Keilplatten;

In den verschiedenen Figuren werden gleiche Komponenten mit den gleichen Bezugsziffern bezeichnet.

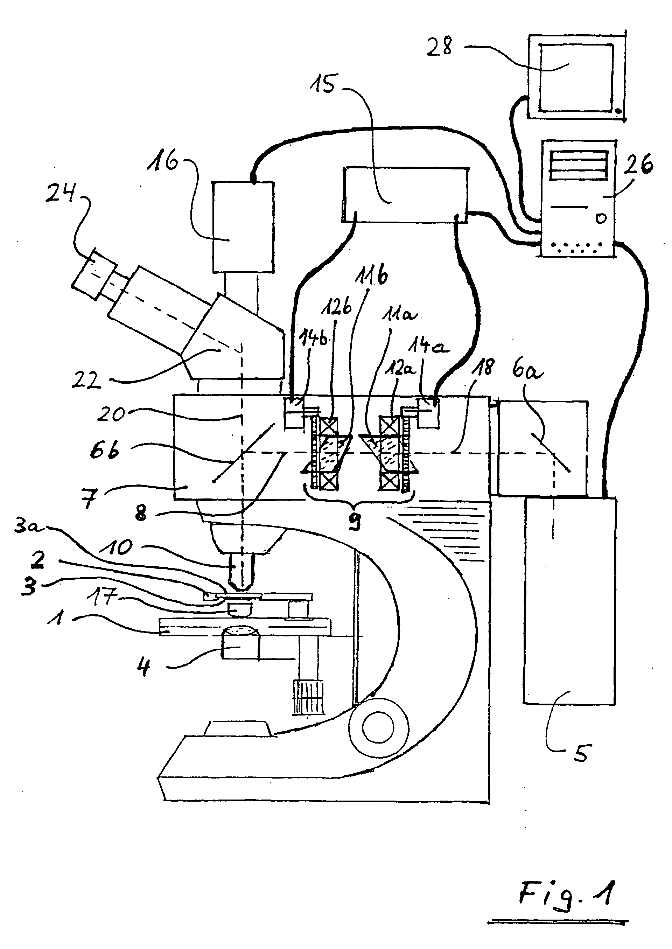

***Fig. 1*** zeigt ein erfindungsgemäßes Laser-Mikro-Dissektionsgerät. Das Laser-Mikro-Dissektionsgerät weist einen Mikroskoptisch 1 auf, auf dem eine Präparat-Halterung 2 angeordnet ist, die einen Objektträger 3a trägt, an dessen Unterseite sich ein zu schneidendes Präparat 3 befindet. Unter dem Mikroskoptisch 1 ist ein Kondensor 4 angeordnet, durch den das Präparat 3 beleuchtet wird. Der Mikroskoptisch 1 wird während des nachfolgend beschriebenen Schneidvorgangs horizontal, also in x-Richtung und in y-Richtung, nicht verfahren.

Von einer Laserlichtquelle 5 , die hier als UV-Laserlichtquelle ausgelegt ist, geht ein Laserstrahl aus, der über einen ersten Umlenkspiegel 6a in eine Auflicht-Einrichtung 7 mit einer optischen Achse 8 eingekoppelt wird. In der Auflicht-Einrichtung 7 ist eine Laser-Scan-Einrichtung 9 angeordnet. Der Laserstrahl durchläuft die Laser-Scan-Einrichtung 9 und gelangt über einen zweiten Umlenkspiegel 6b zu einem Objektiv 10, das den Laserstrahl auf das Präparat 3 fokussiert. Der Umlenkspiegel 6b ist mit Vorteil als dichromatischer Teiler ausgeführt, durch den ein von dem Präparat 3 durch das Objektiv 10 ausgehende Abbildungsstrahlengang 20 zu einem Tubus 22 und Okularen 24 gelangt.

Die Laser-Scan-Einrichtung 9 besteht aus zwei dicken Glas-Keilplatten 11a, 11b, die gegen die optische Achse 8 geneigt und unabhängig von einander um die optische Achse 8 drehbar sind. Dazu sind die Keilplatten 11a, 11b mit Kugellagern 12 gelagert. Die Keilplatte 11a ist mit einem Zahnrad 13a und die Keilplatte 11b ist mit einem Zahnrad 13b fest verbunden. Die Drehung der Keilplatten 11a, 11b erfolgt mittels zweier zugeordneter Schrittmotoren 14a, 14b, wobei der Schrittmotor 14a an dem Zahnrad 13a und der Schrittmotor 14b an dem Zahnrad 13b angreift.

Die beiden Schrittmotoren 14a, 14b sind mit einer Schrittmotor-Steuerungseinheit 15 verbundenen, welche die Steuersignale zur Ansteuerung der beiden Schrittmotoren 14a, 14b liefert. Die Schrittmotorsteuerung ist mit einem Rechner 26 verbunden, an den ein Monitor 28 angeschlossen ist. Auf dem Monitor 28 wird das von einer Kamera 16 aufgenommene Bild des Präparats 3 dargestellt. Auf dem Monitor 28 kann mittels einer Rechner-Maus (nicht dargestellt) eine Schnittlinie definiert werden. Der Rechner 26 ist außerdem mit der Laserlichtquelle 5 verbunden und liefert diesem Triggersignale zum Auslösen von Laserpulsen, wenn die Glas-Keilplatten 11 a, b durch die Schrittmotoren 14 a, b in die Sollposition für die Schnittlinie gebracht wurden.

Durch Drehung der beiden Glas-Keilplatten 11a, 11b erscheint der Laserstrahl am Ausgang der Laser-Scan-Einrichtung 9 unter verschiedenen Ablenkwinkeln und durchläuft das Objektiv 10 jeweils durch die Mitte der Objektiv-Pupille. Dabei kann der Laserstrahl durch Variation des Ablenkwinkels auf beliebige Positionen auf dem Präparat 3 geführt werden, die innerhalb des Sehfeldes des Objektivs 10 liegen. Durch geeignete Ansteuerung der Drehung der beiden Glas-Keilplatten 11a, 11b kann auf dem Präparat 3 eine Schnittlinie erzeugt werden. Der ausgeschnittene Teil des Präparats 3 fällt durch die rahmenförmige Aussparung in der Präparat-Halterung 2 in ein Auffanggefäß 17, das unterhalb des Präparats 3 auf dem Mikroskoptisch 1 angeordnet ist.

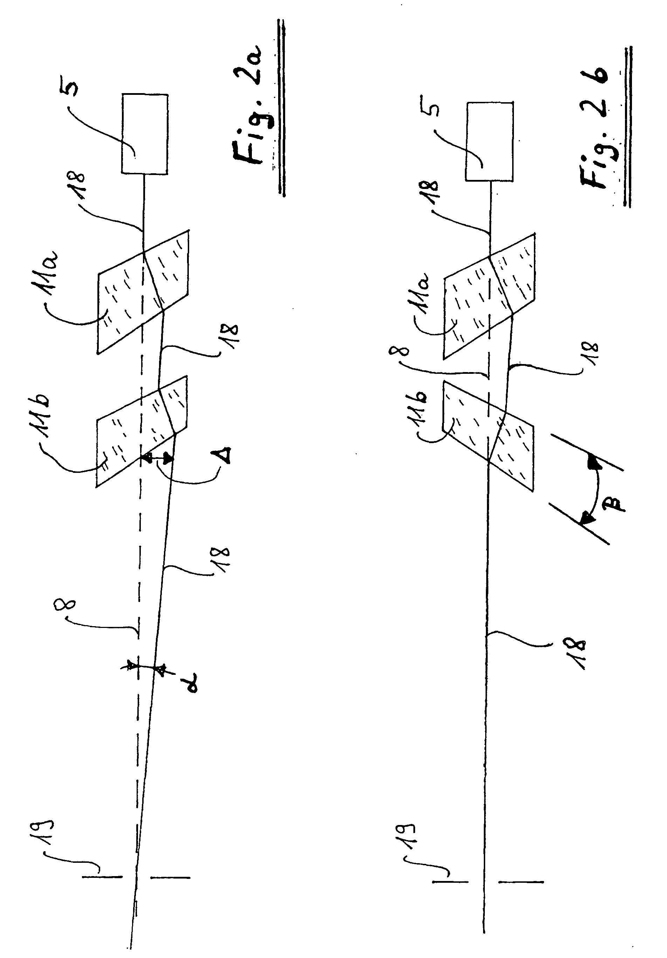

Der Strahlenverlauf des Laserstrahls in der Laser-Scan-Einrichtung 9 wird in den ***Fig. 2a*** und ***2b*** verdeutlicht. Gezeigt wird die schematische Anordnung von zwei Glas-Keilplatten 11a, 11b in einer Laser-Scan-Einrichtung 9. In ***Fig. 2b*** ist zur Verdeutlichung der Keilwinkel β einer der beiden Glas-Keilplatten (11a, 11b) dargestellt. Als Keilwinkel β bezeichnet man die Winkeldifferenz zwischen der vorderen Begrenzungsfläche und der hinteren Begrenzungsfläche der Glas-Keilplatte (11a, 11b).

Von einer Laserlichtquelle 5 geht auf einer optischen Achse 8 ein Laserstrahl 18 aus, der auf die Keilplatten 11a, 11b gerichtet ist. An jeder Glas-Keilplatte 11a, 11b erfährt der Laserstrahl 18 durch ihren jeweiligen Keilwinkel eine Strahlablenkung. Damit ergibt sich nach Durchlaufen beider Glas-Keilplatten 11a, 11b insgesamt ein Ablenkwinkel α.

Zusätzlich wird durch die Dicke und die Neigung der Glas-Keilplatten 11a, 11b an jeder der beiden Glas-Keilplatten 11a, 11b ein Strahlversatz des Laserstrahles 18 erzeugt. Dadurch weist der Laserstrahl 18 nach Durchlaufen beider Glas-Keilplatten 11a, 11b insgesamt einen Strahlversatz Δ auf, der so groß ist, daß der Laserstrahl 18 stets durch die Mitte einer Objektiv-Pupille 19 eines nicht weiter dargestellten Objektivs 10 hindurchtritt.

***Fig. 2a*** zeigt die beiden Glas-Keilplatten 11a, 11b in Parallelstellung. Dabei wird der größte Ablenkwinkel α und der größte Strahlversatz Δ erzeugt. ***Fig***. ***2b*** zeigt die beiden Glas-Keilplatten 11a, 11b in Anti-Parallelstellung. Dabei wird keine Strahlablenkung, d.h. ein Ablenkwinkel α = 0, und auch kein Strahlversatz, d.h. Δ = 0, erzeugt.

Der Strahlversatz Δ ist für alle Ablenkwinkel α gerade so groß, dass er die seitliche Ablage des abgelenkten Strahls in der Pupillenebene gerade kompensiert, so dass der Laserstrahl für alle Ablenkwinkel Δ die Mitte der Objektivpupille 19 trifft.

Indem die beiden Keilplatten 11a, 11b um die optische Achse 8 gedreht werden, werden die Strahlablenkung und der Strahlversatz des Laserstrahls 18 so variiert, dass der Laserstrahl 18 bei allen eingestellten Ablenkwinkeln α die Objektiv-Pupille 19 stets in der Mitte durchtritt, so dass der Laserstrahl 18 über das zu schneidende Präparat 3 geführt wird.

Die vorliegende Erfindung ist in Bezug auf Ausführungsbeispiele beschrieben worden, es jedoch für jeden auf diesem Fachgebiet tätigen Fachmann offensichtlich, dass Änderungen und Abwandlungen vorgenommen werden können, ohne dabei den Schutzbereich der nachstehenden Ansprüche zu verlassen.

### Bezugszeichenliste

- 1: Mikroskoptisch
- 2: Präparat-Halterung
- 3: Präparat
- 3a: Objektträger
- 4: Kondensor
- 5: Laserlichtquelle
- 6: Umlenkspiegel a,b
- 7: Auflicht-Einrichtung
- 8: optische Achse
- 9: Laser-Scan-Einrichtung
- 10: Objektiv
- 11: Glas-Keilplatten (11a, 11b)
- 12: Kugellager
- 13: Zahnräder (13a, 13)b
- 14: Schrittmotoren (14a, 14b)
- 15: Motorsteuerung
- 16: Kamera
- 17: Auffanggefäß
- 18: Laserstrahl
- 19: Objektiv-Pupille
- 20: Abbildungsstrahlengang
- 22: Tubus
- 24: Okular
- 26: Rechner
- 28: Monitor

- α: Ablenkwinkel
- β: Keilwinkel
- Δ: Strahlversatz

## Patentansprüche

1. Laser-Mikro-Dissektionsgerät mit
- einem Mikroskoptisch (1), der ein zu schneidendes Präparat (3) trägt,
- und einer Auflicht-Einrichtung (7) mit einer optischen Achse (8),
- einer Laserlichtquelle (5) zur Erzeugung eines Laserstrahls (18)
- und einem Mikroskop-Objektiv (10) zum Fokussieren des Laserstrahls (18) auf das Präparat (3),
**dadurch gekennzeichnet**,
a) dass der Mikroskoptisch (1) bezüglich der x-Richtung und der y-Richtung, die die senkrecht zur optischen Achse stehende Ebene definieren, beim Schneiden feststehend angeordnet ist,
b) und dass in der Auflicht-Einrichtung (7) eine Laser-Scan-Einrichtung (9) angeordnet ist, die aus zwei dicken, gegen die optische Achse (8) geneigten und unabhängig von einander um die optische Achse (8) drehbaren Glas-Keilplatten (11a, 11b) besteht, welche durch ihre Keilwinkel eine Strahlablenkung erzeugen, wobei durch die Drehung der Glas-Keilplatten (11a, 11b) der resultierende Ablenkwinkel α des Laserstrahls (18) gegenüber der optischen Achse (8) variiabel ist,
c) und dass der Laserstrahl (18) am Ausgang der Laser-Scän-Einrichtung (9) durch die Dicke und die Schrägstellung der Glas-Keilplatten (11a, 11b) einen seitlichen Strahlversatz gegenüber der optischen Achse (8) aufweist und für alle Ablenkwinkel α die Mitte der Objektiv-Pupille (19) des Objektivs (10) trifft.

2. Laser-Mikro-Dissektionsgerät nach Anspruch 1 ,
**dadurch gekennzeichnet,**
**dass** die Laserlichtquelle (5) ein UV-Laser oder ein IR-Laser oder ein VIS-Laser ist.

3. Laser-Mikro-Dissektionsgerät nach Anspruch 1 ,
**dadurch gekennzeichnet,**
a) dass jeder Glas-Keilplatte (11a, 11b) ein Motor (14a, 14b) zur Drehung der Glas-Keilplatte(11a, 11b) um die optische Achse (8) zugeordnet ist und
b) dass den Motoren (14a, 14b) eine Motorsteuerung (15) zugeordnet ist.

4. Laser-Mikro-Dissektionsgerät nach Anspruch 1 ,
**dadurch gekennzeichnet,**
a) dass jeder Glas-Keilplatte (11a, 11b) ein Motor (14a, 14b) zur Drehung der Glas-Keilplatten (11a, 11b) um die optische Achse (8) zugeordnet ist,
b) dass den Motoren (14a, 14b) eine Motorsteuerung (15) zugeordnet ist,
c) dass ein Rechner (26) mit einer Maus und einem Monitor (28) vorgesehen ist, wobei der Rechner (26) mit der Motorsteuerung (15) und der Laserlichtquelle (5) verbunden ist,
d) dass eine Kamera (16) vorgesehen ist , die ein Bild des Präparats (3) aufnimmt, welches auf dem Monitor (28) dargestellt wird.

5. Verwendung eines Laser-Mikro-Dissektionsgerät nach Anspruch 4, **gekennzeichnet durch** die Verfahrensschritte:
a) Definieren einer Schnittlinie mittels der Maus auf dem Monitor (28),
b) rechnerische Zerlegung der Schnittlinie in eine Reihe von aneinandergrenzenden Schnittlöchern, deren Mittelpunkte den während des Schneidvorgangs auf dem Präparat (3) einzunehmenden Soll-Positionen des Laserstrahls entsprechen,
c) Berechnung des Ablenkwinkels α des Laserstrahls (18) zu jeder einzelnen einzunehmenden Position und Berechnung der zugeordneten Drehstellungen der Glas-Keilplatten (11a, 11b),
d) Erzeugen der Steuersignale für die motorische Drehung der Glas-Keilplatten (11a, 11b),
e) und Erzeugen der definierten Schnittlinie **durch** Ablenken des Laserstrahls (18) in die berechneten Soll-Positionen **durch** Drehen der Glas-Keilplatten (11a, 11b).

6. Verwendung eines Laser-Mikro-Dissektionsgeräts nach Anspruch 1 ,
**dadurch gekennzeichnet,**
**dass** der von der Laser-Scan-Einrichtung abgelenkte Laserstrahl zur Materialbearbeitung angewendet wird.

7. Verwendung eines Laser-Mikro-Dissektionsgeräts nach Anspruch 5 ,
**dadurch gekennzeichnet,**
**dass** der abgelenkte Laserstrahl computergesteuert geführt wird und mit ihm Oberflächen beschriftet werden.

8. Verwendung eines Laser-Mikro-Dissektionsgeräts nach Anspruch 1 ,
**dadurch gekennzeichnet,**
**dass** der abgelenkte Laserstrahl als optische Pinzette benutzt wird, indem mit ihm einzelne Partikel erfasst und transportiert werden.

## Claims

1. Laser microdissection device, having
- a microscope stage (1), which carries a preparation (3) to be cut,
- and a direct-light instrument (7) having an optical axis (8),
- a laser light source (5) for producing a laser beam (18)
- and a microscope objective (10) for focusing the laser beam (18) onto the preparation (3),
**characterized**
a) in that the microscope stage (1) is arranged static with respect to the x direction and the y direction, which define the plane perpendicular to the optical axis, during cutting,
b) and in that the direct-light instrument (7) contains a laser scanning instrument (9), which consists of two thick glass wedge plates (11a, 11b) which are inclined in relation to the optical axis (8) and can be rotated independently of one another about the optical axis (8), and which produce a beam deflection owing to their wedge angle, the resulting deflection angle α of the laser beam (18) in relation to the optical axis (8) being variable by rotating the glass wedge plates (11a, 11b),
c) and in that the laser beam (18) has a lateral beam offset in relation to the optical axis (8) at the output of the laser scanning instrument (9), owing to the thickness and the oblique setting of the glass wedge plates (11a, 11b), and it strikes the middle of the objective pupil (19) of the objective (10) for all deflection angles α.

2. Laser microdissection device according to Claim 1,
**characterized in that**
the laser light source (5) is a UV laser or an IR laser or a VIS laser.

3. Laser microdissection device accoring to Claim 1,
**characterized**
a) in that each glass wedge plate (11a, 11b) is assigned a motor (14a, 14b) for rotating the glass wedge plate (11a, 11b) about the optical axis (8), and
b) in that the motors (14a, 14b) are assigned a motor controller (15).

4. Laser microdissection device according to Claim 1,
**characterized**
a) in that each glass wedge plate (11a, 11b) is assigned a motor (14a, 14b) for rotating the glass wedge plates (11a, 11b) about the optical axis (8),
b) in that the motors (14a, 14b) are assigned a motor controller (15),
c) in that a computer (26) having a mouse and a monitor (28) is provided, the computer (26) being connected to the motor controller (15) and to the laser light source (5),
d) in that a camera (16) is provided which takes a picture of the preparation (3), the said picture being displayed on the monitor (28).

5. Use of a laser microdissection device according to Claim 4,
**characterized by** the method steps:
a) defining a cutting line on the monitor (28) by means of the mouse,
b) computerized division of the cutting line into a series of contiguous cutting holes, the centres of which correspond to the setpoint positions of the laser beam that are to be occupied on the preparation (3) during the cutting process,
c) calculating the deflection angle α of the laser beam (18) for each individual position to be occupied, and calculating the associated rotational settings of the glass wedge plates (11a, 11b),
d) producing the control signals for the motorized rotation of the glass wedge plates (11a, 11b),
e) and producing the defined cutting line by deflecting the laser beam (18) into the calculated setpoint positions by rotating the glass wedge plates (11a, 11b).

6. Use of a laser microdissection device according to Claim 1,
**characterized in that**
the laser beam deflected by the laser scanning instrument is used for processing of materials.

7. Use of a laser microdissection device according to Claim 5,
**characterized in that**
the deflected laser beam is guided under computer control, and it is used for scribing surfaces.

8. Use of a laser microdissection device according to Claim 1,
**characterized in that**
the deflected laser beam is used as optical tweezers, by using it to pick up and transfer individual particles.

## Revendications

1. Appareil de microdissection laser qui présente
- une table (1) de microscope qui porte l'objet (3) à couper,
- un dispositif d'éclairage (7) d'axe optique (8),
- une source (5) de lumière laser qui délivre un rayon laser (18) et
- un objectif (10) de microscope qui concentre le rayon laser (18) sur l'objet (3),
**caractérisé en ce que**
a) la table (1) de microscope est agencée de manière à, lors de la coupe, rester fixe par rapport aux directions x et y qui définissent le plan perpendiculaire à l'axe optique,
b) dans le dispositif d'éclairage (7) est agencé un dispositif (9) de balayage laser constitué de deux épaisses plaques de verre en biseau (11a, 11b) inclinées par rapport à l'axe optique (8) qui peuvent être déplacées indépendamment l'une de l'autre en rotation autour de l'axe optique (8) et qui dévient le rayon du fait de leur angle de biseau, la rotation des plaques de verre en biseau (11a, 11b) permettant de modifier l'angle de déviation résultant α duquel le rayon laser (18) est dévié par rapport à l'axe optique (8) et
c) du fait de l'épaisseur et de la position inclinée des plaques de verre en biseau (11a, 11b), lorsqu'il sort du dispositif (9) de balayage laser, le rayon laser (18) est décalé latéralement par rapport à l'axe optique (8) et arrive au milieu de la pupille (19) de l'objectif (10) quel que soit l'angle de déviation α.

2. Appareil de microdissection laser selon la revendication 1, **caractérisé en ce que** la source (5) de lumière laser est un laser UV, un laser IR ou un laser VIS.

3. Appareil de microdissection laser selon la revendication 1, **caractérisé en ce que**
a) à chaque plaque de verre en biseau (11a, 11b) est associé un moteur (14a, 14b) qui déplace la plaque de verre en biseau (11a, 11b) en rotation autour de l'axe optique (8) et
b) un dispositif de commande (15) de moteur est associé aux moteurs (14a, 14b).

4. Appareil de microdissection laser selon la revendication 1, **caractérisé en ce que**
a) à chaque plaque de verre en biseau (11a, 11b) est associé un moteur (14a, 14b) qui déplace la plaque de verre en biseau (11a, 11b) en rotation autour de l'axe optique (8),
b) un dispositif de commande (15) de moteur est associé aux moteurs (14a, 14b),
c) un ordinateur (26) qui présente une souris et un moniteur (28) est prévu, l'ordinateur (26) étant relié au dispositif de commande (15) de moteur et à la source (5) de lumière laser et
d) une caméra (16) est prévue et prend une image de l'objet (3) qui est représentée sur le moniteur (28).

5. Utilisation d'un appareil de microdissection laser selon la revendication 4, **caractérisée par** les étapes de procédé qui consistent à
a) définir une ligne de coupe sur le moniteur (28) au moyen de la souris,
b) décomposer par ordinateur la ligne de coupe en une rangée de trous de coupe contigus dont les points centraux correspondent aux positions cibles que doit prendre le rayon laser sur l'objet (3) lors de l'opération de coupe,
c) calculer l'angle de déviation α du rayon laser (18) pour chacune des différentes positions à prendre et calculer la rotation associée des plaques de verre en biseau (11a, 11b),
d) générer les signaux de commande pour la rotation motorisée des plaques de verre en biseau (11a, 11b) et
e) créer la ligne de coupe définie en déviant le rayon laser (18) dans les positions cibles calculées, en déplaçant par rotation les plaques de verre en biseau (11a, 11b).

6. Utilisation d'un appareil de microdissection laser selon la revendication 1, **caractérisée en ce que** le rayon laser dévié par le dispositif de balayage laser est utilisé pour travailler des matériaux.

7. Utilisation d'un appareil de microdissection laser selon la revendication 5, **caractérisée en ce que** le rayon laser dévié est guidé par ordinateur et est utilisé pour écrire sur des surfaces.

8. Utilisation d'un appareil de microdissection laser selon la revendication 1, **caractérisée en ce que** le rayon laser dévié est utilisé comme pincette optique qui saisit et transporte des particules isolées.
